# DEMANDE DE BREVET EUROPEEN

(11) **EP 2 062 806 A1**
(43) Date de publication de la demande: **27.05.2009**
(21) Numéro de dépôt: 08168420.1
(22) Date de dépôt: 05.11.2008
(51) Int. Cl.: B62D 65/06, B60J 5/10, B60J 1/18

(54) **Procédé de montage d'un ouvrant sur la face arrière d'un véhicule et ouvrant comprenant un volet et un panneau**

(30) Priorité: 26.11.2007 FR 0759298
(71) Demandeur: Peugeot Citroën Automobiles Société Anonyme, 78140 Velizy Villacoublay (FR)
(72) Inventeur: Remy, Stéphane, 70400, BELVERNE (FR)
(74) Mandataire: Allain, Laurent

(57) **Abrégé**

L'invention concerne un procédé de montage d'un ouvrant sur la face arrière d'un véhicule et aussi un ouvrant comprenant un volet et un panneau.

Ce procédé est caractérisé par le positionnement préalable du volet (2) sur la face arrière du véhicule, ce volet (2) étant laissé en position ouverte, le positionnement du panneau (1) en le superposant sur l'interface caisse (3), ce panneau (1) ayant, après ce positionnement, une liberté de mouvement dans le sens longitudinal de cette interface caisse (3), la fermeture du volet (2) et solidarisation du panneau (1) avec le volet (2) par les moyens de solidarisation commune, avec centrage du panneau (1) par rapport au volet (2) par déplacement longitudinal du panneau (1), et la fixation finale du panneau (1) sur l'interface caisse (3).

Application dans le domaine des véhicules automobiles.

## Description

La présente invention concerne, d'une façon générale, un procédé de montage d'un ouvrant sur la face arrière d'un véhicule et aussi un ouvrant comprenant un volet et un panneau.
Plus particulièrement, la présente invention concerne un ouvrant avec un panneau articulé dans sa partie inférieure et surmonté d'un volet articulé à sa partie supérieure. Le panneau d'un tel ouvrant est aussi appelé « hobby ». Quand ce panneau de l'ouvrant est ouvert, il prolonge en général le plancher de coffre vers l'arrière du véhicule. Ce panneau est généralement disposé en dessous d'un volet supérieur, à l'articulation plus classique en partie haute. Un exemple d'un tel ouvrant est divulgué par le document FR-A-2 841 526.
Lors du procédé de montage d'un tel ouvrant, trois éléments sont à solidariser ensemble c'est-à-dire le panneau, l'interface de la caisse de véhicule avec ce panneau et le volet avec ce panneau. La difficulté d'un tel montage réside dans le positionnement des trois éléments les uns par rapport aux autres.
Actuellement, un premier procédé de mise en position d'un tel ouvrant peut se faire par indexation du panneau de l'ouvrant sur l'interface caisse par l'intermédiaire de ses charnières. Sa position est alors figée par rapport à la pièce d'indexation, c'est-à-dire l'interface caisse, mais les dispersions des autres éléments et, notamment du volet, ne sont pas prises en compte. Il peut donc subsister un décalage entre le panneau et la partie basse associée du volet.
Une autre possibilité utilise un procédé de mise en position employant un gabarit. Le panneau est positionné par l'intermédiaire d'un gabarit prenant ses références par rapport au volet. Cela nécessite cependant le développement d'un gabarit compliqué impliquant, en outre, une de mise au point compliquée et qui ajoute sa propre dispersion à celle déjà existante.

Le brevet FR-A-2 803 264 présente un procédé de montage d'ouvrant sur une caisse de véhicule avec une étape de montage d'une charnière sur cette caisse, une étape de positionnement d'un élément de référence sur la charnière dans une position prédéterminée par rapport à la caisse et une étape de montage d'un ouvrant sur la charnière en positionnant l'ouvrant par rapport à l'élément de référence. Ce document ne montre pas le positionnement de trois éléments les uns par rapport aux autres. En appliquant l'enseignement de ce document, après montage de l'ouvrant sur la charnière, il sera impossible de positionner cet ouvrant par rapport à un troisième élément à ajouter à l'ensemble.

La présente invention a pour but d'obtenir un parfait positionnement des éléments d'un ouvrant, composé d'un volet et d'un panneau, entre eux et avec l'interface caisse supportant ce panneau.

A cet effet, l'invention a pour objet un procédé de montage d'un ouvrant formé d'un panneau et d'un volet sur une interface caisse formant une partie de la face arrière d'un véhicule automobile, le panneau et le volet étant destinés à recouvrir une ouverture aménagée à l'arrière de ce véhicule en étant superposés, présentant des moyens de solidarisation commune et étant chacun articulés autour d'un axe longitudinal à cette face arrière respectivement à leurs extrémités inférieure et supérieure pour permettre l'accès à cette ouverture de l'extérieur du véhicule en position relevée, caractérisé par les étapes suivantes :
- positionnement préalable du volet sur la face arrière du véhicule, ce volet étant laissé en position ouverte,
- positionnement du panneau en le superposant sur l'interface caisse, ce panneau ayant, après ce positionnement, une liberté de mouvement dans le sens longitudinal de cette interface caisse,
- fermeture du volet et solidarisation du panneau avec le volet par les moyens de solidarisation commune, avec centrage du panneau par rapport au volet par déplacement longitudinal du panneau,
- fixation finale du panneau sur l'interface caisse.

Avantageusement, la première étape est une étape de fixation du volet par son articulation à son extrémité supérieure sur la face arrière du véhicule.
Avantageusement, l'étape de positionnement du panneau sur l'interface caisse se fait par mise en liaison des bords latéraux du panneau avec une gâche respective solidaire de l'interface caisse.
Avantageusement, après la fermeture du volet et avant la solidarisation du volet avec le panneau, le procédé comprend une étape de recentrage du volet par rapport à l'interface caisse, soit par ajout de cales ou soit par centrage par butées coniques portées par des supports reliés aux côtés latéraux de l'interface caisse.

L'invention a aussi pour objet un ouvrant fixé sur une ouverture aménagée sur la face arrière d'un véhicule automobile, cet ouvrant se composant d'un panneau et d'un volet qui présentent des moyens de solidarisation commune et, chacun, une articulation respective pour leur ouverture et leur fermeture, le panneau étant positionné sur une interface caisse du véhicule par au moins des moyens de positionnement latéraux puis fixé par des moyens de fixation, caractérisé en ce que ces moyens de positionnement latéraux ont un jeu suffisant pour permettre un déplacement longitudinal du panneau par rapport à l'interface caisse afin d'assurer le centrage du panneau et du volet.

Selon des caractéristiques additionnelles de la présente invention :
- les moyens de positionnement latéraux sont assurés, de chaque côté latéral de l'interface de caisse, par un support de gâche, solidarisé avec l'interface de caisse et présentant une gâche s'étendant en direction longitudinale de l'interface de caisse et du panneau, chacune des ces gâches s'engageant avec une serrure prévue de chaque côté du panneau pour le positionnement de celui-ci, la longueur des fils de ces gâches permettant un jeu longitudinal entre le panneau et l'interface de caisse.
- les serrures latérales du panneau sont disposées dans la moitié la plus haute de sa largeur.
- les moyens de fixation finale du panneau avec l'interface caisse se composent de supports de charnières du panneau vissés sur cette interface.
- les moyens de solidarisation commune du panneau avec le volet se composent d'une gâche portée par un de ces éléments, coopérant avec une serrure portée par l'autre, ces moyens se trouvant sensiblement au milieu de la longueur de ces éléments.

L'invention concerne également un véhicule automobile, caractérisé en ce qu'il comporte, sur sa face arrière, un tel ouvrant ou en ce qu'un ouvrant est monté conformément à un tel procédé.

L'invention va maintenant être décrite plus en détail mais de façon non limitative en regard des figures annexées, dans lesquelles :
- la figure 1 est une représentation schématique d'une vue de face d'un ouvrant, présentant un panneau et un volet positionnés sur une interface caisse avec, en médaillon, une vue agrandie d'un décalage de positionnement du panneau par rapport au volet,
- la figure 2 est une représentation schématique d'une vue en perspective latérale du panneau montrant les divers éléments de ce panneau servant lors de son positionnement,
- la figure 3 est une représentation schématique d'une vue de face du volet et du panneau de l'ouvrant montrant le début du positionnement du panneau sur l'interface caisse selon le procédé de montage de l'ouvrant conformément à la présente invention,
- la figure 4 est une représentation schématique d'une vue de face de l'ouvrant montrant la fin du positionnement du panneau sur l'interface caisse sans que celui-ci ait encore été centré selon le procédé de montage de l'ouvrant conformément à la présente invention,
- la figure 5 est une représentation schématique d'une vue en perspective de l'ouvrant montrant la solidarisation du panneau avec le volet selon le procédé de montage de l'ouvrant conformément à la présente invention, avec en médaillons une vue agrandie respective de la serrure du volet et de la gâche du panneau,
- la figure 6 est une représentation schématique d'une vue de face de l'ouvrant montrant le centrage du panneau avec le volet, le cas échéant avec une étape d'utilisation de butées de recentrage, cela avant fixation finale selon le procédé de montage de l'ouvrant conformément à la présente invention.

La présente invention se rapporte à un ouvrant de face arrière de véhicule automobile avec deux éléments. Le véhicule automobile comprend une caisse présentant une face arrière percée d'une ouverture de chargement arrière délimitée par des premier et second bords latéraux opposés. L'ouvrant arrière est mobile par rapport à la caisse entre une position fermée dans laquelle cet ouvrant obture l'ouverture arrière et au moins une position ouverte dans laquelle il dégage l'ouverture arrière. Cet ouvrant comprend deux éléments avec chacun un dispositif d'articulation.

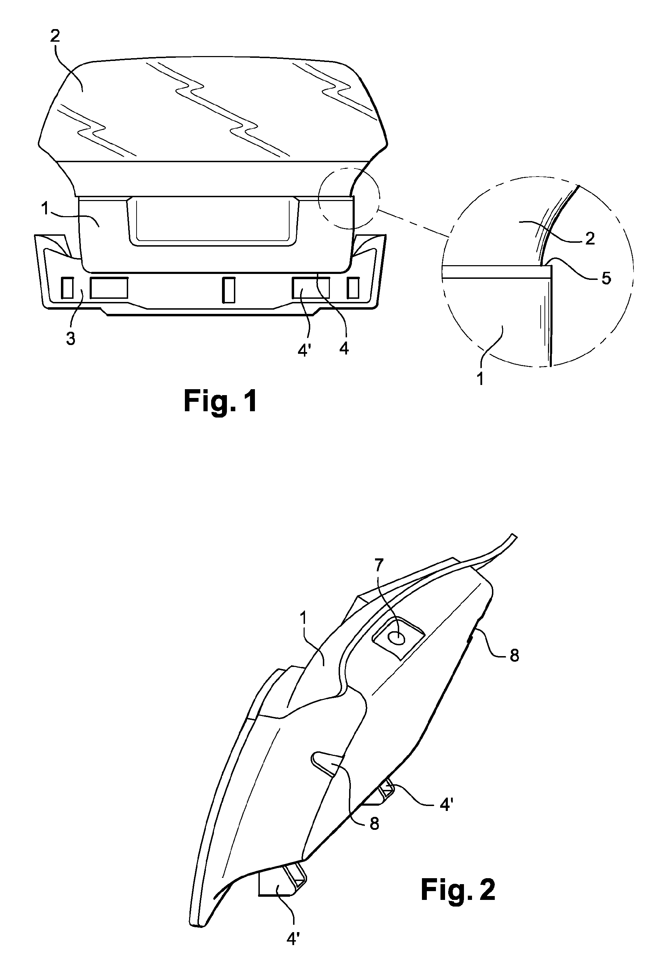

La figure 1 montre un tel ouvrant connu composé d'un panneau 1 et d'un volet 2. Ce volet 2 est superposé au panneau 1 qui lui-même se trouve sur l'interface caisse 3 supportant l'ensemble. Le panneau 1 présente une charnière 4 à sa base pour son articulation par rapport à l'interface caisse 3 tandis que le volet 2 est articulé sur sa partie supérieure par rapport à la partie supérieure de la face arrière du véhicule automobile. Comme le véhicule typique portant un tel ouvrant présente généralement une face arrière sensiblement verticale, le volet 2 est généralement articulé sur un axe transversal disposé à proximité du bord transversal supérieur de l'ouverture de chargement.
Quand, selon l'état de la technique, le panneau 1 est directement indexé sur l'interface caisse 3 par les appuis 4' de ses charnières 4, il n'est pas possible de corriger toutes les dispersions et il peut exister un décalage 5 entre le panneau 1 et le volet 2 comme il est montré à la vue agrandie.
La présente invention a pour but de corriger un tel décalage de positionnement par un procédé de montage et un ouvrant qui vont être décrits maintenant.

Selon l'invention, le procédé de montage d'un ouvrant formé d'un panneau 1 et d'un volet 2 sur une interface caisse 3 formant une partie de la face arrière d'un véhicule automobile, le panneau 1 et le volet 2 étant destinés à recouvrir une ouverture aménagée à l'arrière de ce véhicule en étant superposés. Le panneau et le volet présentent un moyen de solidarisation commun et sont chacun articulés autour d'un axe longitudinal à cette face arrière respectivement à leurs extrémités inférieure et supérieure pour permettre l'accès à cette ouverture de l'extérieur du véhicule. Le procédé selon l'invention comprend les étapes suivantes :
- positionnement préalable du volet sur la face arrière du véhicule, ce volet pouvant être en position ouverte ou fermée,
- positionnement du panneau en le superposant à l'interface caisse, ce panneau ayant, après ce positionnement, une liberté de mouvement dans le sens longitudinal de cette interface caisse,
- fermeture du volet et solidarisation du panneau avec le volet par le moyen de solidarisation commun avec centrage du panneau par rapport au volet par déplacement longitudinal du panneau,
- fixation finale du panneau sur l'interface caisse.

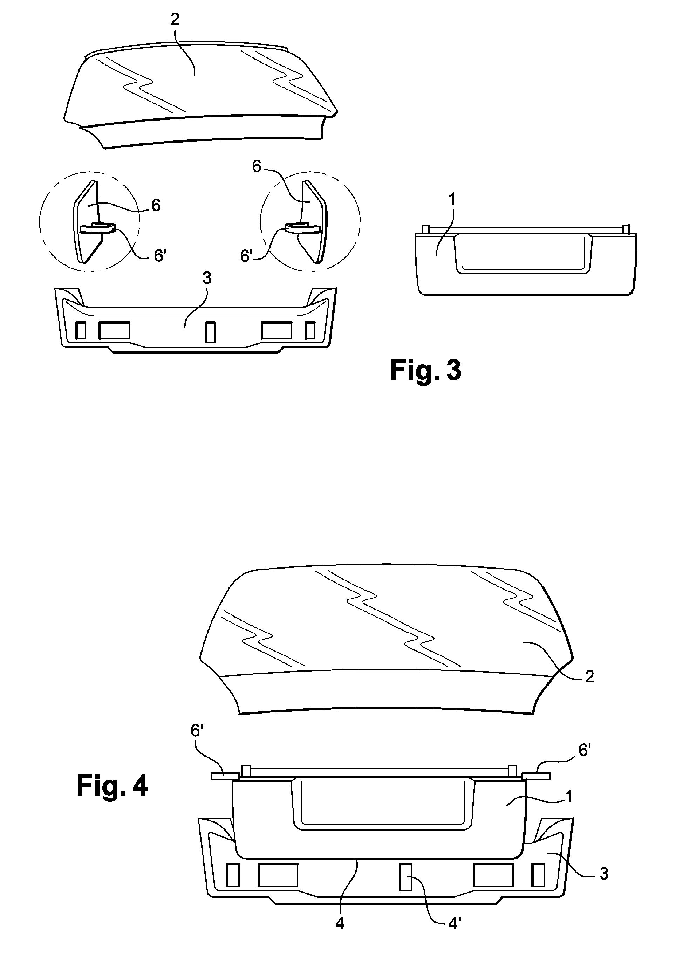

La figure 2 montre les divers éléments portés par le panneau 1.
Au poste de montage, le panneau 1 est équipé de serrures 8 latérales coopérant avec un fil de gâche 6' respectif, qui sera vu à la figure 3, d'une gâche 7 pour sa solidarisation avec le volet 2 et de charnières 4 pour son articulation avec l'interface de caisse 3.
L'ensemble caisse arrière avec l'interface de caisse 3 est amené au poste de montage du panneau 1. Le volet 2 est, préférentiellement, déjà fixé sur la caisse par son articulation à sa face supérieure.
Le début du positionnement du panneau 1 sur l'interface de caisse 3 est montré à la figure 3.
Pour le positionnement du panneau 1, l'ouvrant selon la présente invention et dans le mode de réalisation décrit aux figures, comprend des moyens de positionnement latéraux assurés, de chaque côté latéral de l'interface de caisse 3, par un support de gâche 6, solidarisé avec l'interface de caisse 3 et présentant une gâche 6' avec un fil s'étendant en direction longitudinale de l'interface de caisse 3 et du panneau 1. Ce fil de gâche 6' s'engage avec une serrure 8 correspondante, prévue de chaque côté du panneau 1 pour son positionnement. Une longueur suffisante de ces fils de gâche 6' des deux côtés du panneau 1 permet un jeu longitudinal entre le panneau 1 et l'interface de caisse 3. Avec un tel jeu du panneau 1 sur les fils de gâche 6' sur chacun de ses côtés latéraux, le panneau 1 peut coulisser horizontalement le long des fils de gâche 6', longitudinalement à l'interface caisse 3.
Avantageusement, les serrures latérales 8 du panneau sont disposées dans la moitié la plus haute de sa largeur.

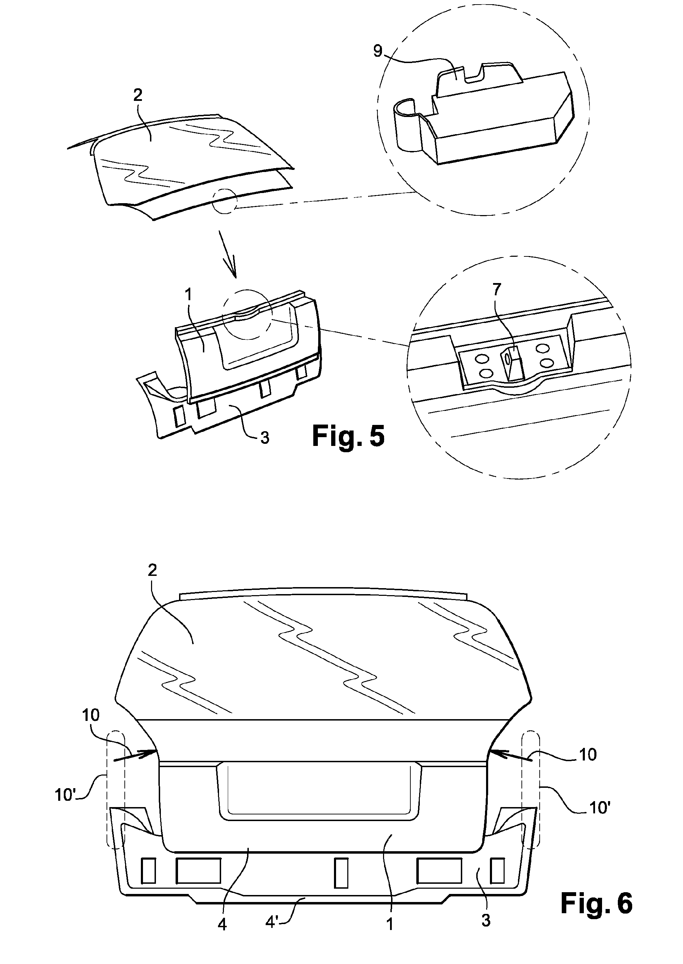

La figure 4 montre le positionnement du panneau 1 sur l'interface de caisse 3.
Les étapes suivantes du procédé sont montrées aux figures 5 et 6. Le volet 2 est rabattu en position de fermeture et un recentrage éventuel de celui-ci par rapport à l'interface de caisse 3 est effectué grâce, par exemple, à des cales, non montrées aux figures, ou par l'intermédiaire de butées coniques 10. Celles-ci sont portées par des supports 10' reliés aux côtés latéraux de l'interface caisse 3. Le volet 2 est ensuite solidarisé avec le panneau 1 par le moyen de solidarisation commun constitué par la serrure 9 portée par le volet 2 et la gâche 7 portée par le panneau 1, ces moyens se trouvant sensiblement au milieu de la longueur de ces éléments. Ainsi, le panneau 1 peut coulisser sur les fils de gâche 6' et venir se centrer par rapport au volet 2.
La dernière étape du procédé est la fixation du panneau 1 sur l'interface caisse 3 par l'intermédiaire de ses supports de charnière 4' qui sont vissées sur cette interface caisse 3. Le panneau, le volet et l'interface caisse 3 sont alors positionnés les uns par rapport aux autres avec une liberté de pivotement pour le volet 2 et le panneau 1 autour de leur articulation respective, articulation à la base du panneau autour de la charnière 4 pour le panneau 1 et articulation à sa partie supérieure pour le volet 2.

La présente invention concerne aussi un véhicule automobile, caractérisé en ce qu'il comporte, sur sa face arrière, un tel ouvrant, ou en ce qu'un ouvrant est monté sur ce véhicule conformément à un tel procédé.
Dans ce qui précède, il a été montré un ouvrant pour la face arrière d'un véhicule mais l'enseignement de la présente invention, à savoir réaliser le positionnement de trois éléments avec positionnement d'un premier élément sur un second en gardant une liberté de déplacement longitudinal du premier élément pour un centrage de ce premier élément par rapport au troisième, est applicable pour tout type d'ouvrant d'un véhicule.

La présente invention permet de garantir un bon positionnement des éléments cités les uns par rapport aux autres et ne nécessite aucun gabarit.
Il est à noter que l'utilisation de butées coniques n'est qu'une option possible et que ces butées coniques et leur support ne peuvent être assimilés à un gabarit.
Ainsi, le panneau mis en position est parfaitement centré par rapport au volet, celui-ci étant déjà dans son environnement. On obtient donc un alignement des deux parties de l'ouvrant entre elles et un centrage de ces deux parties par rapport à la caisse de véhicule.
La solution permet donc de réaliser un gain en coût de développement, en coût d'exploitation, en productivité et en qualité de fabrication.

L'invention n'est nullement limitée au mode de réalisation décrit et illustré qui n'a été donné qu'à titre d'exemple.
Dans la présente description, des fils de gâche ont été montrés pour illustrer des moyens de positionnement permettant une liberté de coulissement longitudinal du panneau. La présente invention n'est pas limitée à l'utilisation de tels fils de gâche et l'ouvrant selon l'invention comprend avec l'interface caisse tout moyen de positionnement ayant un jeu suffisant pour permettre un déplacement longitudinal du panneau par rapport à l'interface caisse afin d'assurer un positionnement correct du panneau, du volet et de l'interface caisse.
Il en est de même pour les serrures sur l'un des éléments et leurs correspondants sur l'autre ainsi que des modes d'articulation communs ou indépendants du panneau et du volet.

## Revendications

1. Procédé de montage d'un ouvrant formé d'un panneau (1) et d'un volet (2) sur une interface caisse (3) formant une partie de la face arrière d'un véhicule automobile, le panneau (1) et le volet (2) étant destinés à recouvrir une ouverture aménagée à l'arrière de ce véhicule en étant superposés, présentant des moyens de solidarisation commune (7, 9) et étant chacun articulés autour d'un axe longitudinal à cette face arrière respectivement à leurs extrémités inférieure et supérieure pour permettre l'accès à cette ouverture de l'extérieur du véhicule en position relevée, **caractérisé par** les étapes suivantes :
- positionnement préalable du volet (2) sur la face arrière du véhicule, ce volet (2) étant laissé en position ouverte,
- positionnement du panneau (1) en le superposant sur l'interface caisse (3), ce panneau (1) ayant, après ce positionnement, une liberté de mouvement dans le sens longitudinal de cette interface caisse (3),
- fermeture du volet (2) et solidarisation du panneau (1) avec le volet (2) par les moyens de solidarisation commune (7, 9), avec centrage du panneau (1) par rapport au volet (2) par déplacement longitudinal du panneau (1),
- fixation finale du panneau (1) sur l'interface caisse (3).

2. Procédé selon la revendication 1, **caractérisé en ce que** la première étape est une étape de fixation du volet (2) par son articulation à son extrémité supérieure sur la face arrière du véhicule.

3. Procédé selon la revendication 1 ou 2, **caractérisé en ce que** l'étape de positionnement du panneau (1) sur l'interface caisse (3) se fait par mise en liaison des bords latéraux du panneau (1) avec une gâche (6') respective solidaire de l'interface caisse (3).

4. Procédé selon l'une quelconque des revendications précédentes, **caractérisé en ce qu'**après la fermeture du volet (2) et avant la solidarisation du volet (2) avec le panneau (1), il comprend une étape de recentrage du volet (2) par rapport à l'interface caisse (3), soit par ajout de cales ou soit par centrage par butées coniques (10) portées par des supports (10') reliés aux côtés latéraux de l'interface caisse.

5. Véhicule automobile, comportant, sur sa face arrière, un ouvrant, **caractérisé en ce que** cet ouvrant est monté conformément au procédé selon l'une quelconque des revendications 1 à 4.
